# EUROPEAN PATENT SPECIFICATION

(11) **EP 1 088 973 B1**
(45) Date of publication and mention of the grant of the patent: **12.04.2006**
(21) Application number: 00121118.4
(22) Date of filing: 28.09.2000
(51) Int. Cl.: F02B 23/10

(54) **In-cylinder direct injection spark ignition engine**
Direkteinspritzbrennkraftmaschine mit Fremdzündung
Moteur à combustion à injection directe et à allumage commandé

(30) Priority: 01.10.1999 JP 28124999
(43) Date of publication of application: 04.04.2001
(73) Proprietor: NISSAN MOTOR CO., LTD., Yokohama-shi, Kanagawa 221-0023 (JP)
(72) Inventor: Itou, Yasuyuki, Yokohama-shi, Kanagawa 240-0032 (JP); Iriya, Yuichi, Yokohama-shi, Kanagawa 223-0053 (JP); Tsuchida, Hirofumi, Yokosuka-shi, Kanagawa 239-0806 (JP); Yamaguchi, Koichi, Yokohama-shi, Kanagawa 244-0843 (JP)
(74) Representative: Weber, Joachim

(56) References cited:
- EP-A- 0 694 682
- EP-A- 0 921 287
- EP-A- 1 081 350
- US-A- 5 305 720
- US-A- 5 327 864
- US-A- 5 735 240

## Description

### BACKGROUND OF THE INVENTION:

### Field of the invention:

The present invention relates to an in-cylinder direct injection spark ignition internal combustion engine to perform a stratified combustion during a compression stroke during which fuel is injected using a tumble flow.

### Description of the related art:

A Japanese Patent Application First Publication No. Heisei 10-054247 (JP10054247) published on February 24, 1998 exemplifies a previously proposed in-cylinder direct injection internal combustion engine.

The previously proposed in-cylinder direct injection internal combustion engine includes: a pent-roof combustion chamber recessed on a cylinder head; a recessed groove formed on a piston crown surface and faced toward an intake valve; a spark plug disposed on an approximately center of the pent-roof combustion chamber; and a fuel injection valve positioned at a lower side of an intake port to inject fuel toward the recessed groove.

A tumble flow is generated in the pent-roof combustion chamber in such a manner that after lowering along a cylinder inner wall surface located below the intake valve, the gas flow is guided along the recessed groove of the piston crown surface, while changing the flow direction, and is raised at a lower side of the exhaust valve to direct toward a surrounding space about the spark plug.

Hence, fuel injected from the fuel injection valve toward the recessed groove during the compression stroke is guided along a bottom surface of the recessed groove to be introduced to the tumble flow, thus being directed toward an inner space of the combustion chamber surrounding the spark plug. Then, a stratified combustion of fuel can be achieved. Consequently, the engine is driven with a super lean air-fuel mixture ratio so that a fuel consumption can be saved.

Document EP 1 081 350 A, which is considered to be comprised in the state of the art pursuant to Art. 54(3) EPC, discloses an in-cylinder direct injection engine with a pent-roof combustion chamber, a recess in the piston crown, a fuel injector on the intake valve side, part of the injected fuel is set to direct uninterruptedly towards the spark plug and squish flow is generated.

Document 5 305 720 A discloses an in-cylinder direct injection engine with a pent-roof combustion chamber, a recess in the piston crown, a fuel injector on the intake valve side and squish flow is generated.

### SUMMARY OF THE INVENTION:

In the previously proposed in-cylinder spark ignition internal combustion engine described in the BACKGROUND OF THE INVENTION, almost fuel is transported into a surrounding of the spark plug by the tumble (gas) flow. However, this fuel is not resided in the surrounding of the spark plug for a long term but is passed over the surrounding of the spark plug toward the intake port in a short term. Therefore, it is difficult to secure a combustion stability since a spark timing at which a favorable ignition can be obtained is limited in a short period of time.

In addition, since almost fuel is injected into an inner space of the recessed groove, a quantity of fuel adhered on a bottom surface of the recessed groove becomes increased so that an exhaust gas emission quality could be worsened.

It is, therefore, an object of the present invention to provide an in-cylinder direct injection spark ignition internal combustion engine which can eliminate the above-described problems, viz., can reside sprayed fuel from the fuel injection valve at the surrounding of the spark plug for a relatively long term.

According to one aspect of the present invention, there is provided an in-cylinder direct injection spark ignition internal combustion engine, comprising: a pent-roof combustion chamber (2) recessed on a cylinder head (1); a recess (4) formed on a crown surface of a piston (3); a spark plug (5) disposed at an approximately center of the pent-roof combustion chamber; and a fuel injection valve (7) located at a portion of the cylinder head adjacent to the intake port and faced against the piston to inject fuel in an obliquely downward direction with respect to the pent-roof combustion chamber, characterized in that while part of sprayed fuel from the fuel injection valve (7) is set to direct uninterruptedly toward a surrounding of the spark plug (5), a squish flow generated during a later period of a compression stroke is set to a direction approximately opposite to that of sprayed fuel set toward the surrounding of the spark plug (5).

This summary of the invention does not necessarily describe all necessary features so that the invention may also be a sub-combination of these described features.

### BRIEF DESCRIPTION OF THE DRAWINGS:

Fig. 1 is a cross sectional view of an in-cylinder direct injection spark ignition internal combustion engine representing a first preferred embodiment according to the present invention.
Fig. 2 is an explanatory partial cross sectional view for explaining a relationship between a fuel spray area and a position of a spark plug in the first preferred embodiment shown in Fig. 1.
Figs. 3A and 3B are explanatory partial cross sectional views for explaining a dimensional relationship of each essential element of the in-cylinder direct injection spark ignition engine shown in Fig. 1 and an effect of the engine shown in Fig. 1.
Figs. 4A and 4B are explanatory partial cross sectional views for explaining the dimensional relationship of each essential element of the in-cylinder direct injection spark ignition engine in a second preferred embodiment according to the present invention and an effect achieved by the engine in the second embodiment.
Fig. 5 is an explanatory partial cross sectional view for explaining the dimensional relationship of each essential element of the in-cylinder direct injection spark ignition engine in a third preferred embodiment.
Figs. 6A and 6B are explanatory cross sectional views for explaining the dimensional relationship of each essential element and an effect achieved in each of the first through third embodiments.

### DETAILED DESCRIPTION OF THE PREFERRED EMBODIMENTS:

Reference will hereinafter be made to the drawings in order to facilitate a better understanding of the present invention.

### (First Embodiment)

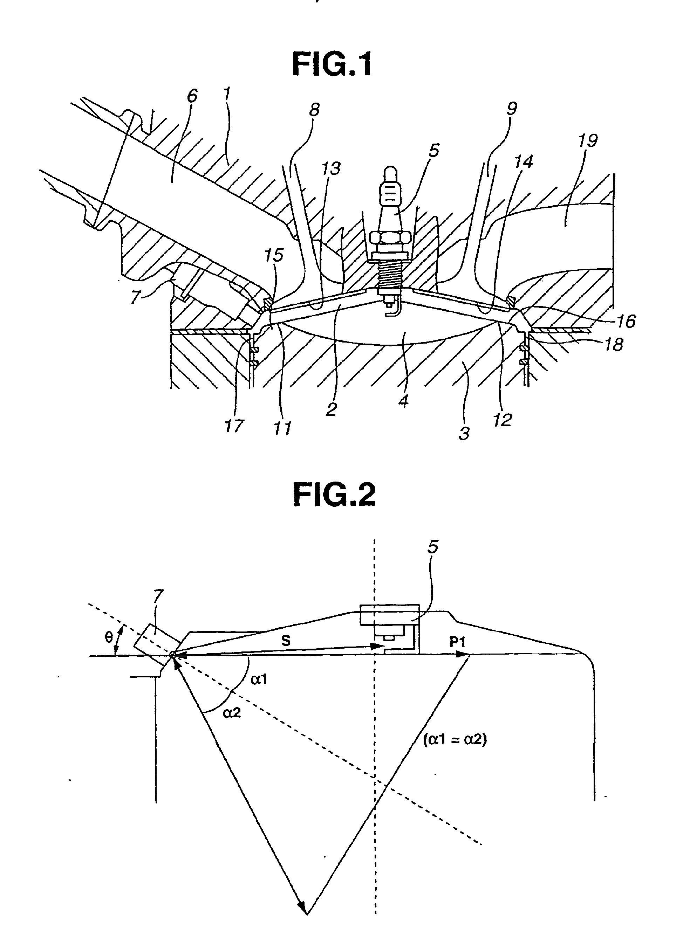

Fig. 1, 2, 3A, 3B, and 6 show an in-cylinder direct injection spark ignition internal combustion engine in a first preferred embodiment according to the present invention.

Fig. 1 shows a cross sectional view of the in-cylinder direct injection spark ignition engine in the first embodiment according to the present invention.

In Fig. 1, the in-cylinder direct injection spark ignition engine includes: a pent-roof combustion chamber 2 recessed on a cylinder head 1; a recess 4 (also called, a cavity combustion chamber) formed on a crown surface of a piston 3; a spark plug 5 disposed at an approximately center of pent-roof combustion chamber 2; a fuel injection valve 7 located in cylinder head 1 below an intake port 6 to inject fuel toward an obliquely downward direction with respect to pent-roof combustion chamber 2; an intake valve 8; and an exhaust valve 9.

A stratified combustion is performed by means of a compression stroke injection using a tumble flow.

It is noted that a portion 13 of an inclined face forming pent-roof combustion chamber 2 recessed on cylinder head 1 located aside an intake port 6 (hereinafter, an intake side inclined face) and a portion 14 of the inclined face forming pent-roof combustion chamber 2 recessed on cylinder head 1 located aside an exhaust port 19 (hereinafter, also called an exhaust side inclined face) are provided and a portion 15 of an inclined face formed an a convexity other than recess 4 of the crown surface of piston 3 faced toward intake port 6 (hereinafter, also called a piston intake side inclined face) and a portion 16 of the inclined face formed on the convexity and faced toward exhaust port 19 (herein also called, a piston exhaust side slat surface) are provided

In addition, in Fig. 1, a reference numeral 11 denotes a cut-out position of recess 4 which is faced toward intake port 6 (hereinafter, also called a piston intake side cut-out position), a reference numeral 12 denotes a cut-out position of recess 4 which is faced toward exhaust port 19 (hereinafter, also called a piston exhaust side cut-out position), a reference numeral 17 denotes a top land portion of piston 3 faced toward intake port 6, and a reference numeral 18 denotes a top land portion of piston 3 faced toward exhaust port 19.

As shown in Fig. 2, suppose that a mounting angle. *θ* of fuel injection valve 7 with respect to an inner peripheral wall surface of cylinder head 1, a spray upper end portion angle α1, and a spray lower end portion angle α2 (in this embodiment, α1 ≒ α 2) are set so that part of sprayed fuel (upper end portion) from fuel injection valve 7 is directed directly or uninterruptedly toward an inner space surrounding spark plug 5 (viz., a surrounding of spark plug 5).

A penetration (so called, an arrival distance) P1 of part of sprayed fuel directed to the surrounding of spark plug 5 and a distance S from an injection point of fuel injection valve 7 to spark plug 5 are P1 > S.

A squish flow from exhaust port 19 causes part of spray fuel to be restrained at the surrounding of spark plug 5. If P1 ≦ S, sprayed fuel cannot arrive thereat. A squish area is set on the basis of the above-described relationship of P1 > S.

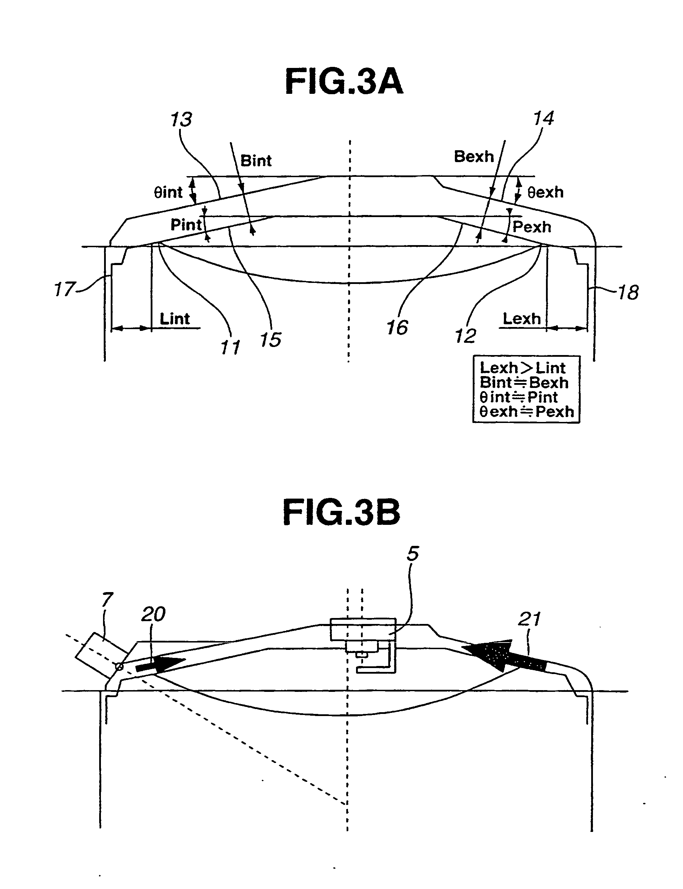

As shown in Fig. 3, if a length from top land portion 18 of the piston faced toward exhaust port 19 to recess exhaust side cut-out position 12 is Lexh and a length from top land portion 17 of piston 3 faced toward intake port 6 to cut-out position 11 faced toward intake port 6 is Lint, Lexh > Lint.

Furthermore, Lexh/Lint ≒ *β* x (P1/S) and 0.8 ≦ *β* ≦ 1.2.

In addition, both intake side and exhaust side inclined faces 15 and 16 set on the convexity of the piston crown surface other than recess 4 of piston 3 are set to be approximately parallel to intake and exhaust side inclined faces 13 and 14 forming pent-roof combustion chamber 2 recessed on cylinder head 1. That is to say, an angle Pint formed between intake side inclined face 15 of piston 3 and its virtual horizontal plane is approximately equal to angle *θ* int formed between the intake side inclined face forming pent-roof combustion chamber 2 and its horizontal plane (Pint ≒ *θ* int). An angle Pexh of exhaust side inclined face 16 of piston 3 faced toward exhaust port 19 is approximately equal to an angle *θ* exh of exhaust side inclined face 14 forming pent-roof combustion chamber 2 (Pexh ≒ *θ* int). An angle Pexh of exhaust side inclined face 16 of piston 3 toward exhaust port 19 is approximately equal to an angle *θ*exh of exhaust side inclined face 14 forming pent-roof combustion chamber 2 (Pexh ≒ *θ* exh).

In addition, distances Bint and Bexh from piston intake and exhaust side inclined faces 15 and 16 to cylinder head intake and exhaust side inclined faces 13 and 14 are set to be approximately equal (equidistant) to each other, viz., Bint ≒ Bexh.

According to the setting of the dimensional relationship described above, in the in-cylinder direct injection spark ignition engine in which part of fuel sprayed from fuel injection valve 7 is injected directly toward the surrounding of spark plug 5, length Lexh from top land portion 18 of piston 3 faced toward exhaust port 19 is set to be longer than length Lint from top land portion 17 of piston 3 faced toward intake port 6 to intake side cut-out position of recess 4.

Hence, as compared with a flow pressure of a squish flow 20 from an intake side squish area, a flow pressure of a squish flow 21 from an exhaust side squish area can be set to be stronger. Consequently, a gas flow from a strong squish flow side (exhaust side squish flow 21) to a weak squish flow side (intake side squish flow 20) is generated. Hence, this gas flow causes sprayed fuel injected from fuel injection valve 7 to be continued to be resided around spark plug 5.

Since sprayed fuel is resided around spark plug 5 for the long period of time, the stratified combustion becomes stable and the fuel economy and exhaust gas emission can become improved.

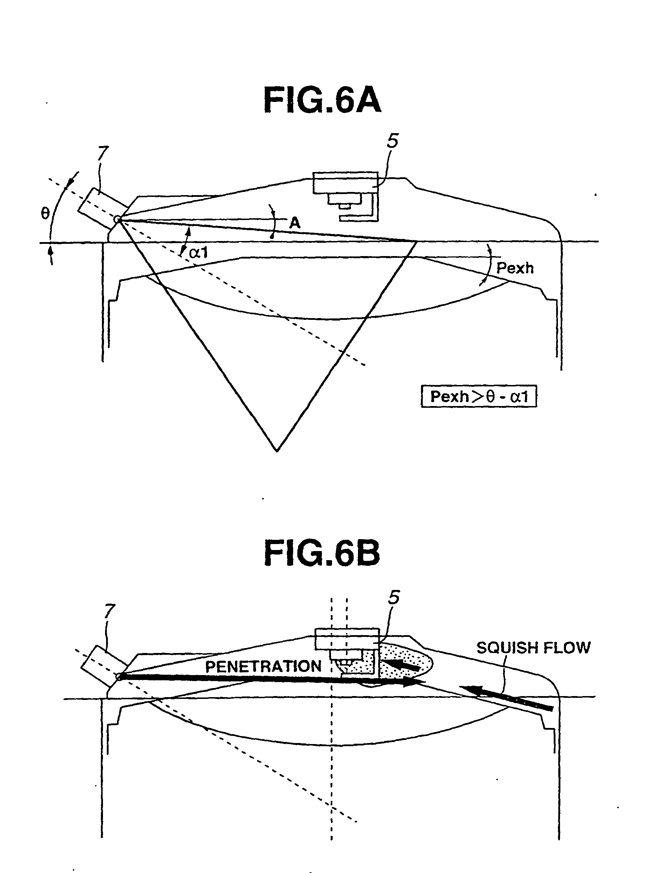

In addition, as shown in Figs. 6A and 6B, if the angle formed between the upper end of sprayed fuel and the horizontal plane is A, this angle A is set to be narrower than angle Pexh (the angle of exhaust side inclined face 16 of piston 3) (Pexh > A). That is to say, since A = *θ* - α1, the relationship of Pexh > *θ* - *α*1 is set.

Since Pexh > A as described above, exhaust side squish flow 21 causes the spray to be pushed upward and cause sprayed fuel to be resided in a state where sprayed fuel becomes nearer to spark plug 5. Consequently, a more stable combustion can be achieved.

### (Second Embodiment)

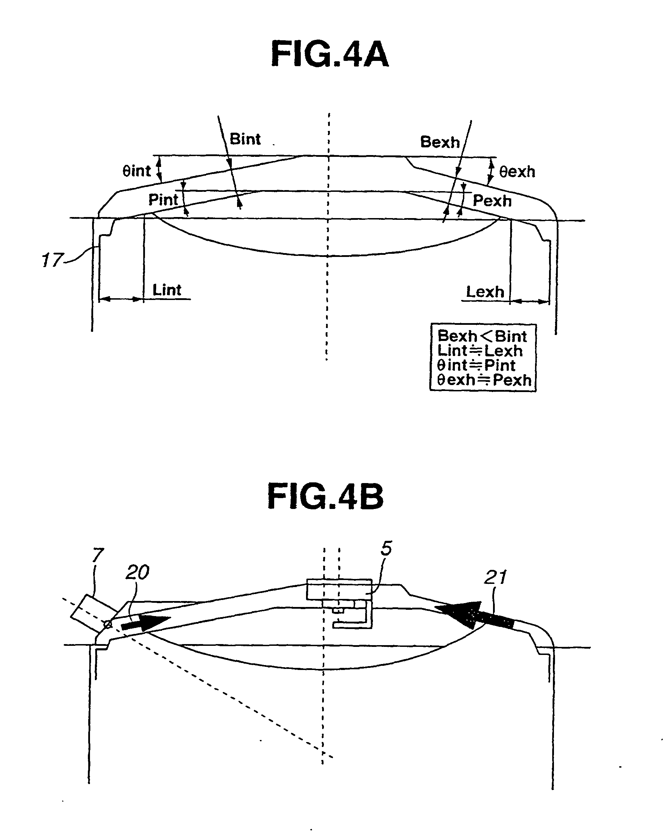

Figs. 4A and 4B show a second preferred embodiment of the in-cylinder direct injection spark ignition engine according to the present invention.

In the same way as described in the first embodiment, part of sprayed fuel (viz., the upper part of sprayed fuel) from fuel injection valve 7 is directed directly or uninterruptedly toward the surrounding of spark plug 5.

The penetration P1 of sprayed fuel directed toward the inner space surrounding spark plug 5 and distance S from the injection point of fuel injection valve 7 to spark plug 5 has the relationship as P1 > S.

As shown in Figs. 4A and 4B, intake side and exhaust side inclined faces 15 and 16 set on the convexity of recess 4 of the crown surface of piston 3 are set respectively to be approximately parallel to intake side and exhaust side inclined faces 13 and 14 forming pent-roof combustion chamber 2 recessed on cylinder head 1. The settings are as follows: Pint ≒ *θ* int and Pexh ≒ *θ* exh.

Suppose that a distance between piston intake side inclined face 15 and cylinder head intake side inclined face 13 is Bint and a distance between piston exhaust side inclined face 14 is Bexh. The setting is as follows: Bexh/Bint ≒ γ x (P1/S) and 0.25 ≦ γ < 1.0.

In addition, suppose that a length from top land portion 18 of piston 3 faced toward exhaust port 19 to exhaust side cut-out position 12 of recess 4 is Lexh and a length from top land portion 17 of piston 3 faced toward the intake port to intake side cut-out position 11 of recess 4 is Lint. The length of Lexh is set to be approximately equidistant to the length of Lint, viz., Lexh ≒ Lint.

In the second embodiment of the in-cylinder direct injection spark ignition engine in which part of sprayed fuel from fuel injection valve 7 is injected directly toward the surrounding of spark plug 5, distance Bint between piston intake side inclined face 15 and the cylinder head intake side inclined face 13 is set to be longer than distance Bexh between piston exhaust side inclined face 11 and cylinder head exhaust side inclined face 14.

In other words, distance Bexh is set to be shorter than that of Bint.

The flow pressure of squish flow 21 derived from the exhaust side squish area can be set to be stronger than that of the other squish flow 20 derived from the intake side squish area so that a gas flow from the strong squish flow side (exhaust side squish flow 21) to the weak squish flow side (intake side squish flow 20) is developed. Hence, in the same way as described in the first embodiment, this gas flow causes the sprayed fuel injected from fuel injection valve 7 to be restrained at the surrounding of spark plug 5. Since spray is resided for a long term in the surrounding of spark plug 5, the stratified combustion becomes stable and the fuel economy and exhaust gas emission become improved.

It is noted that, in the second embodiment, the relationship of Pexh > A (= *θ* - *α*1) is set so that the sprayed fuel is pushed upward by means of the exhaust side squish flow and sprayed fuel is resided in a state where the spray becomes nearer to the surrounding of spark plug 5, viz., around a spark point of spark plug 5. Consequently, the stratified combustion becomes more stable.

### (Third Embodiment)

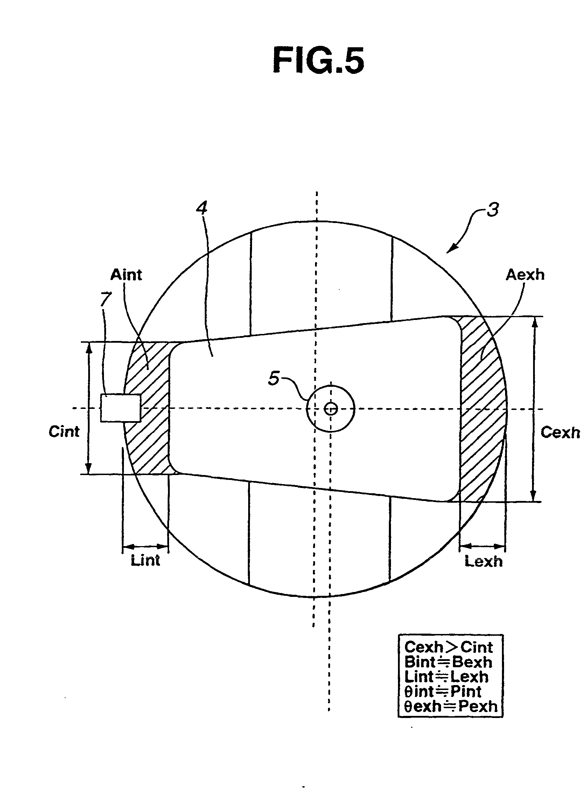

Fig. 5 shows a third preferred embodiment of the in-cylinder direct injection spark ignition engine according to the present invention.

In the same manner as the first embodiment, part of sprayed fuel (upper end) from fuel injection valve 7 is directed toward the surrounding of spark plug 5. The relationship between penetration P1 of sprayed fuel directed toward the surrounding of spark plug 5 and distance S from the injection point to spark plug 5 is as follows: P1 > S.

As shown in Fig. 5, suppose that a width of the recess of the crown surface of piston 3 faced toward exhaust port 19 is Cexh and a width of recess 4 thereof faced toward intake port 6 is Cint. The following is set: Cexh > Cint. Furthermore, the setting is as follows: Cexh/Cint ≒ η x (P1/S) and 1.2 ≦ η ≦ 1.6.

In addition, the length from top land portion 18 of piston 3 faced toward exhaust port 19 to exhaust cut-out position 12 of recess 4 is Lexh and the length from top land portion 17 of piston 3 faced toward intake port 19 to cut-out position 11 of recess 4 faced toward the intake port is Lint. The length Lexh is set to be approximately equidistant to length Lint (Lexh ≒ Lint).

In addition, with piston 3 reached to an upper top dead center, distance Bint and Bexh between the piston intake side and exhaust side inclined faces 15 and 16 and the cylinder head intake side and exhaust side inclined faces 13 and 14 are set to be approximately equidistant to each other (Bint ≒ Bexh).

As described above, in the third embodiment of the in-cylinder direct injection spark ignition engine in which part of sprayed fuel from the fuel injection valve 7 is injected toward the surrounding of spark plug 5, width Cexh of recess 4 of the piston crown surface faced toward exhaust port 19 is set to be wider than width Cint of recess 4 faced toward intake port 6. An area (squish area: a hatched portion shown in Fig. 5) of a part of recess 4 located at an outside of an elongated direction of recess 4, which contributes to the squish flow, and faced toward exhaust port 19 is, thus, set to be relatively wider than the other point of recess 4 faced toward intake port 6 (in Fig. 5, the exhaust side area Aexh > intake side area Aint), the flow pressure of squish flow from the exhaust side squish area can be set to be stronger than that of the squish flow from the intake side squish area. Thus, the gas flow from the strong squish flow (exhaust side squish flow) to the weak squish flow (intake side squish flow) is developed. As described above, the gas flow causes the sprayed fuel injected from fuel injection valve 7 to be restrained at the surrounding of spark plug 5 and sprayed fuel is resided at the surrounding of spark plug 5 for the long term. Consequently, the stratified combustion becomes stable and the fuel consumption and the exhaust gas emission can be improved.

In the third embodiment, as shown in Fig. 6, the relationship of Pexh > A (= *θ* - *α*1) is set in the same way as described in the first and second embodiments.

Consequently, the exhaust side squish flow causes the spray to be pushed in an upper direction so that the spray is resided in the state where the sprayed fuel becomes nearer to the surrounding of spark plug 5. Consequently, the stratified combustion becomes more stable.

It is noted that, in each of the first through third embodiments, spray upper end angle *α* 1 and spray lower end angle *α*2 are set to be *α*1 ≒ *α*2. However, the present invention is applicable to a case where the penetration of the spray upper end is P1, that of the spray lower end is P2. In this alternative case, the sprayed fuel can more be concentrated on the spark plug direction. Hence, the stratification can be improved and a spray directional deviation can be achieved. Thus, a performance of the stratified combustion can be improved. The further improvements in the fuel consumption and exhaust gas emission can be achieved.

## Claims

1. An in-cylinder direct injection spark ignition internal combustion engine, comprising:
- a pent-roof combustion chamber (2) recessed on a cylinder head (1);
- a recess (4) formed on a crown surface of a piston (3);
- a spark plug (5) disposed at an approximately center of the pent-roof combustion chamber (2);
- a fuel injection valve (7) located at a portion of the cylinder head (1) adjacent to the intake port (6) and faced against the piston (3) to inject fuel in an obliquely downward direction with respect to the pent-roof combustion chamber;
wherein
- part of sprayed fuel from the fuel injection valve (7) is set to direct uninterruptedly towards a surrounding of the spark plug (5);
- a penetration (P1) of part of sprayed fuel from an injection point at the exit of the fuel injection valve (7) in the direction of the spark plug (5) being greater than a distance (S) from the injection point to the spark plug (5);
- a squish flow (21) generated during a later period of a compression stroke is set to a direction approximately opposite to that of sprayed fuel set toward the surrounding of the spark plug (5);
- a squish flow (20) generated during the same period and which is caused to flow from the intake port (6) to the exhaust port (19); and
- the pressure of the squish flow (21) being stronger than that of the squish flow (20).

2. An in-cylinder direct injection spark ignition internal combustion engine as claimed in claim 1, **characterized in that** a length (Lexh) from a top land portion (18) of the piston faced toward an exhaust port to a cut-out position (12) of the recess formed on the crown surface of the piston which is faced toward the exhaust port is set to be longer than that (Lint) from the top land portion (17) of the piston faced toward the intake port to a cut-out position (11) of the recess formed on the crown surface of the piston which is faced toward the intake port, both of portions (15, 16) of an inclined face set on a convexity other than the recess of the piston crown surface faced toward the intake port and toward the exhaust port are set to be approximately parallel to both portions (14, 13) of an inclined face forming the pent-roof combustion chamber on the cylinder head which are faced toward the intake and exhaust ports, and distances (Bint and Bexh) from a portion (15) of the inclined face of the piston faced toward the intake port to a portion (14) of the inclined face of the cylinder head forming the pent-roof combustion chamber faced toward the intake port and from a portion (16) of the inclined face of the piston faced toward the exhaust port to a portion (13) of the inclined face of the cylinder head forming the pent-roof combustion chamber faced toward the exhaust port are set to be approximately equidistant.

3. An in-cylinder direct injection spark ignition internal combustion engine as claimed in claim 1, **characterized in that** portions (15, 16) of an inclined face formed on a convexity other than the recess of the piston crown surface and faced toward the intake port and toward the exhaust port are set respectively to be approximately parallel to portions (14, 13) of an inclined face forming the pent-roof combustion chamber on the cylinder head faced toward the intake port and toward the exhaust port, a distance (Bint) from a portion (15) of the inclined face of the piston faced toward the intake port to a portion (14) of the inclined face forming the pent-roof combustion chamber on the cylinder head faced toward the intake port is set to be longer than a distance (Bexh) from a portion (16) of the inclined face of the piston faced toward the exhaust port to a portion (13) of the inclined face forming the pent-roof combustion chamber on the cylinder head faced toward the exhaust port, and a length (Lexh) from a top land portion (18) of the piston faced toward the exhaust port to a cut-out position (12) of the recess formed on the crown surface of the piston faced toward the exhaust port is set to be approximately equidistant to that (Lint) from the top land portion (17) of the piston faced toward the intake port to a cut-out position (11) of the recess formed on the crown surface of the piston faced toward the intake port.

4. An in-cylinder direct injection spark ignition internal combustion engine as claimed in claim 1, **characterized in that** a width (Cexh) of a portion of the recess formed on the piston crown surface faced toward an exhaust port is set to be wider than that (Cint) of a portion of the recess formed on the piston crown surface faced toward the intake port, a length (Lexh) from a top land portion (18) of the piston faced toward an exhaust port to a cut-out position (12) of the recess formed on the crown surface of the piston faced toward the exhaust port is set to be longer than that (Lint) from the top land portion (17) of the piston faced toward an intake port to a cut-out position (11) of the recess formed on the crown surface of the piston faced toward the intake port, both of portions (15, 16) of an inclined face set on a convexity other than the recess of the piston crown surface faced toward the intake valve and toward the exhaust valve are set to be approximately parallel to both portions (14, 13) of an inclined face forming the pent-roof combustion chamber on the cylinder head which are faced toward the intake and exhaust ports, and distances (Bint and Bexh) from a portion (15) of the inclined face of the piston faced toward the intake port to a portion (14) of the inclined face of the cylinder head forming the pent-roof combustion chamber faced toward the intake port and from a portion (16) of the inclined face of the piston faced toward the exhaust port to a portion (13) of the inclined face of the cylinder head forming the pent-roof combustion chamber faced toward the exhaust port are set to be approximately equidistant.

5. An in-cylinder direct injection spark ignition internal combustion engine as claimed in any one of preceding claims 1 through 4, **characterized in that** if an angle formed between an upper end part of sprayed fuel from the fuel injection valve and a horizontal plane is A, the angle A is set to be narrower than an angle Pexh (in Fig. 6A) formed by a squish face at the exhaust port.

## Patentansprüche

1. Direkteinspritzbrennkraftmaschine mit Fremdzündung:
- mit einem Pultdach-Brennraum (2), der in einem Zylinderkopf (1) ausgespart ist;
- mit einer Ausnehmung (4), die auf einer Bodenfläche eines Kolbens (3) ausgebildet ist;
- mit einer Zündkerze (5), die ungefähr an einem Mittelpunkt des Pultdach-Brennraums (2) angeordnet ist;
- mit einem Kraftstoff-Einspritzventil (7), das an einem Bereich des Zylinderkopfs (1) benachbart zum Einlasskanal (6) und dem Kolben (3) gegenüberliegend angeordnet ist, um Kraftstoff bezüglich des Pultdach-Brennraums in einer schrägen Richtung nach unten einzuspritzen; wobei
- ein Teil des vom Kraftstoff-Einspritzventil (7) versprühten Kraftstoffs eingestellt ist, um sich ununterbrochen auf eine Umgebung der Zündkerze (5) zu richten;
- eine Eindringtiefe (P1) des Teils des versprühten Kraftstoffs von einem Einspritzpunkt am Ausgang des Kraftstoff-Einspritzventils (7) in der Richtung der Zündkerze (5) größer als ein Abstand (S) vom Einspritzpunkt bis zur Zündkerze (5) ist;
- eine Quetsch-Strömung (21), die während eines späteren Zeitraums eines Verdichtungshubs erzeugt wird, auf eine ungefähr gegenüberliegende Richtung zu der des versprühten Kraftstoffs eingestellt ist, die zur Umgebung der Zündkerze (5) eingestellt ist;
- eine Quetsch-Strömung (20) während des gleichen Zeitraums erzeugt wird und die bestimmt ist, um vom Einlasskanal (6) zum Auslasskanal (19) zu strömen; und
- der Druck der Quetsch-Strömung (21) stärker als der der Quetsch-Strömung (20) ist.

2. Direkteinspritzbrennkraftmaschine mit Fremdzündung gemäß Anspruch 1, **dadurch gekennzeichnet, dass** eine Länge (Lexh) von einem dem Auslasskanal zugewandten oberen Bodenbereich (18) des Kolbens bis zu einer Ausschnitt-Position (12) der auf der Bodenfläche des Kolbens ausgebildeten Ausnehmung, die dem Auslasskanal zugewandt ist, länger festgelegt ist als die (Lint) von einem dem Einlasskanal zugewandten oberen Bodenbereichs (17) des Kolbens bis zu einer Ausschnitt-Position (11) der auf der Bodenfläche des Kolbens ausgebildeten Ausnehmung, die dem Einlasskanal zugewandt ist, dass beide Bereiche (15, 16) einer auf einer Ausbuchtung festgelegten schrägen Fläche, mit Ausnahme der Ausnehmung der Kolbenbodenfläche, die dem Einlasskanal und dem Auslasskanal zugewandt ist, so festgelegt sind, dass sie ungefähr parallel zu beiden Bereichen (14, 13) einer schrägen Fläche sind, die den Pultdach-Brennraum auf dem Zylinderkopf ausbildet, die den Einlass- und Auslasskanälen zugewandt sind und dass Abstände (Bint und Bexh) von einem Bereich (15) der schrägen Fläche des Kolbens, die dem Einlasskanal zugewandt ist, bis zu einem Bereich (14) der schrägen Fläche des Zylinderkopfs, die den Pultdach-Brennraum bildet, der dem Einlasskanal zugewandt ist und von einem Bereich (16) der schrägen Fläche des Kolbens, die dem Auslasskanal zugewandt ist, bis zu einem Bereich (13) der schrägen Fläche des Zylinderkopfs, die den Pultdach-Brennraum bildet, der dem Auslasskanal zugewandt ist, festgelegt sind, um ungefähr gleich weit entfernt zu sein.

3. Direkteinspritzbrennkraftmaschine mit Fremdzündung gemäß Anspruch 1, **dadurch gekennzeichnet, dass** Bereiche (15, 16) der schrägen Fläche, die auf einer Ausbuchtung, mit Ausnahme der Ausnehmung der Kolbenbodenfläche, ausgebildet sind und dem Einlasskanal und dem Auslasskanal zugewandt sind, entsprechend festgelegt sind, um ungefähr parallel zu den Bereichen (14, 13) einer schrägen Fläche zu sein, die den Pultdach-Brennraum auf dem Zylinderkopf ausbildet, der dem Einlasskanal und dem Auslasskanal zugewandt ist, dass ein Abstand (Bint) von einem Bereich (15) der schrägen Fläche des Kolbens, die dem Einlasskanal zugewandt ist, bis zu einem Bereich (14) der schrägen Fläche, die den Pultdach-Brennraum auf dem Zylinder bildet, die dem Einlasskanal zugewandt ist, länger festgelegt ist als ein Abstand (Bexh) von einem Bereich (16) der schrägen Fläche des Kolbens, die dem Auslasskanal zugewandt ist, bis zu einem Bereich (13) der schrägen Fläche, die den Pultdach-Brennraum auf dem Zylinderkopf ausbildet, die dem Auslasskanal zugewandt ist und dass eine Länge (Lexh) von einem oberen Bodenbereich (18) des Kolbens, die dem Auslasskanal zugewandt ist, bis zu einer Ausschnitt-Position (12) der Ausnehmung, die auf der Bodenfläche des Kolbens ausgebildet ist, die dem Auslasskanal zugewandt ist, festgelegt ist, um zu der (Lint) vom oberen Bodenbereich (17) des Kolbens, die zum Einlasskanal zugewandt ist, bis zu einer Ausschnitt-Position (11) der Ausnehmung ungefähr gleich weit entfernt zu sein, die auf der Bodenfläche des Kolbens, die dem Einlasskanal zugewandt ist, ausgebildet ist.

4. Direkteinspritzbrennkraftmaschine mit Fremdzündung gemäß Anspruch 1, **dadurch gekennzeichnet, dass** eine Breite (Cexh) eines Bereichs der Ausnehmung, die auf der Kolbenbodenfläche ausgebildet ist, die einem Auslasskanal zugewandt ist, festgelegt ist, um breiter als die (Cint) eines Bereichs der Ausnehmung zu sein, die auf der Kolbenbodenfläche ausgebildet ist, die dem Einlasskanal zugewandt ist, eine Länge (Lexh) von einem oberen Bodenbereich (18) des Kolbens, der dem Auslasskanal zugewandt ist, bis zu einer Ausschnitt-Position (12) der Ausnehmung, die auf der Bodenfläche des Kolbens ausgebildet ist, die dem Auslasskanälen zugewandt ist, festgelegt ist, um länger als die (Lint) vom oberen Bodenbereich (17) des Kolbens, die einem Einlasskanal zugewandt ist, bis zu einer Ausschnitt-Position (11) der Ausnehmung zu sein, die auf der Bodenfläche des Kolbens ausgebildet ist, die dem Einlasskanal zugewandt ist, beide der Bereiche (15, 16) einer schrägen Fläche, die auf einer Ausbuchtung neben der Ausnehmung der Kolbenbodenfläche festgelegt ist, die dem Einlassventil und dem Auslassventil zugewandt ist, festgelegt sind, um ungefähr parallel zu beiden Bereichen (14, 13) einer schrägen Fläche zu sein, die den Pultdach-Brennraum auf dem Zylinderkopf ausbildet, die den Einlass- und Auslandkanälen zugewandt ist und Abstände (Bint und Bexh) eines Bereichs (15) der schrägen Fläche des Kolbens, die dem Einlasskanal zugewandt ist, bis zu einem Bereich (14) der schrägen Fläche des Zylinderkopfs, die den Pultdach-Brennraum ausbildet, der dem Einlasskanal zugewandt ist und von einem Bereich (16) der schrägen Fläche des Kolbens, die dem Auslasskanälen zugewandt ist, bis zu einem Bereich (13) der schrägen Fläche des Zylinderkopfs, die den Pultdach-Brennraum bildet, die dem Auslasskanälen zugewandt ist, festgelegt sind, um ungefähr gleich weit entfernt zu sein.

5. Direkteinspritzbrennkraftmaschine mit Fremdzündung gemäß einem der vorstehenden Ansprüche 1 bis 4, **dadurch gekennzeichnet, dass**, wenn ein Winkel, der zwischen einem oberen Endbereich des vom Kraftstoff-Einspritzventil versprühtem Kraftstoffs und einer horizontalen Ebene gebildet wird, A ist, der Winkel A kleiner als ein Winkel Pexh (in Fig. 6A) festgelegt ist, der durch eine Quetschfläche am Auslasskanal gebildet wird.

## Revendications

1. Moteur à combustion interne à injection directe et à allumage commandé, comprenant :
une chambre de combustion en appentis (2) en retrait sur une culasse (1) ;
un retrait (4) formé sur une surface de tête d'un piston (3) ;
une bougie d'allumage (5) disposée à un centre approximatif de la chambre de combustion en appentis (2) ;
une soupape d'injection de carburant (7) située sur une partie de la culasse (1) adjacente à l'orifice d'admission (6) et faisant face au piston (3) pour injecter le carburant dans une direction obliquement vers le bas par rapport à la chambre de combustion en appentis ;
dans lequel :
une partie du carburant pulvérisé depuis la soupape d'injection de carburant (7) est prévue pour se diriger de façon ininterrompue vers l'entourage de la bougie d'allumage (5) ;
une pénétration (P1) d'une partie du carburant pulvérisé depuis un point d'injection à la sortie de la soupape d'injection de carburant (7) dans la direction de la bougie d'allumage (5) étant supérieure à une distance (S) depuis le point d'injection vers la bougie d'allumage (5) ;
un flux de jaillissement (21) généré pendant une période ultérieure d'une course de compression est prévu dans une direction approximativement opposée à celle du carburant pulvérisé prévu vers l'entourage de la bougie d'allumage (5) ;
un flux de jaillissement (20) généré pendant la même période et qui est amené à s'écouler depuis l'orifice d'admission (6) vers l'orifice d'échappement (19); et
la pression du flux de jaillissement (21) étant plus forte que celle du flux de jaillissement (20).

2. Moteur à combustion interne à injection directe et à allumage commandé selon la revendication 1, **caractérisé en ce qu'**une longueur (Lexh) depuis une partie d'appui supérieure (18) du piston faisant face à un orifice d'échappement vers une position coupée (12) du retrait formé sur la surface de tête du piston faisant face à l'orifice d'échappement est prévue pour être plus longue que celle (Lint) depuis la partie d'appui supérieure (17) du piston faisant face à l'orifice d'admission vers une position coupée (11) du retrait formé sur la surface de tête du piston faisant face à l'orifice d'admission, les deux parties (15, 16) d'une face inclinée prévue sur une convexité autre que le retrait de la surface de tête de piston faisant face à l'orifice d'admission et à l'orifice d'échappement sont prévues pour être approximativement parallèles aux deux parties (14, 13) d'une face inclinée formant la chambre de combustion en appentis sur la culasse qui font face aux orifices d'admission et d'échappement, et les distances (Bint et Bexh) depuis une partie (15) de la face inclinée du piston faisant face à l'orifice d'admission vers une partie (14) de la face inclinée de la culasse formant la chambre de combustion en appentis faisant face à l'orifice d'admission et depuis une partie (16) de la face inclinée du piston faisant face à l'orifice d'échappement vers une partie (13) de la face inclinée de la culasse formant la chambre de combustion en appentis faisant face à l'orifice d'échappement sont prévues pour être approximativement équidistantes.

3. Moteur à combustion interne à injection directe et à allumage commandé selon la revendication 1, **caractérisé en ce que** les parties (15, 16) d'une face inclinée formée sur une convexité autre que le retrait de la surface de tête de piston et faisant face à l'orifice d'admission et à l'orifice d'échappement sont prévues respectivement pour être approximativement parallèles aux parties (14, 13) d'une face inclinée formant la chambre de combustion en appentis sur la culasse faisant face à l'orifice d'admission et à l'orifice d'échappement, une distance (Bint) depuis une partie (15) de la face inclinée du piston faisant face à l'orifice d'admission vers une partie (14) de la face inclinée formant la chambre de combustion en appentis sur la culasse faisant face à l'orifice d'admission est prévue pour être plus longue qu'une distance (Bexh) depuis une partie (16) de la face inclinée du piston faisant face à l'orifice d'échappement vers une partie (13) de la face inclinée formant la chambre de combustion en appentis sur la culasse faisant face à l'orifice d'échappement, et une longueur (Lexh) depuis une partie d'appui supérieure (18) du piston faisant face à l'orifice d'échappement vers une position coupée (12) du retrait formé sur la surface de tête du piston faisant face à l'orifice d'échappement est prévue pour être approximativement équidistante à celle (Lint) depuis la partie d'appui supérieure (17) du piston faisant face à l'orifice d'admission vers une position coupée (11) du retrait formé sur la surface de tête du piston faisant face à l'orifice d'admission.

4. Moteur à combustion interne à injection directe et à allumage commandé selon la revendication 1, **caractérisé en ce qu'**une largeur (Cexh) d'une partie du retrait formé sur la surface de tête de piston faisant face à un orifice d'échappement est prévue pour être plus large que celle (Cint) d'une partie du retrait formé sur la surface de tête de piston faisant face à l'orifice d'admission, une longueur (Lexh) depuis une partie d'appui supérieure (18) du piston faisant face à l'orifice d'échappement vers une position coupée (12) du retrait formé sur la surface de tête du piston faisant face à l'orifice d'échappement est prévue pour être plus longue que celle (Lint) depuis la partie d'appui supérieure (17) du piston faisant face à l'orifice d'admission vers une position coupée (11) du retrait formé sur la surface de tête du piston faisant face à l'orifice d'admission, les deux parties (15, 16) d'une face inclinée prévue sur une convexité autre que le retrait de la surface de tête de piston faisant face à la soupape d'admission et à la soupape d'échappement sont prévues pour être approximativement parallèles aux deux parties (14, 13) d'une face inclinée formant la chambre de combustion en appentis sur la culasse qui font face aux orifices d'admission et d'échappement, et les distances (Bint et Bexh) depuis une partie (15) de la face inclinée du piston faisant face à l'orifice d'admission vers une partie (14) de la face inclinée de la culasse formant la chambre de combustion en appentis faisant face à l'orifice d'admission et depuis une partie (16) de la face inclinée du piston faisant face à l'orifice d'échappement vers une partie (13) de la face inclinée de la culasse formant la chambre de combustion en appentis faisant face à l'orifice d'échappement sont prévues pour être approximativement équidistants.

5. Moteur à combustion interne à injection directe et à allumage commandé selon l'une quelconque des revendications 1 à 4, **caractérisé en ce que** si un angle formé entre une partie d'extrémité supérieure de carburant pulvérisé depuis la soupape d'injection de carburant et un plan horizontal est A, l'angle A est prévu pour être plus étroit que l'angle Pexh (sur la figure 6A) formé par une face de jaillissement au niveau de l'orifice d'échappement.
